# DEMANDE DE BREVET EUROPEEN

(11) **EP 1 939 476 A1**
(43) Date de publication de la demande: **02.07.2008**
(21) Numéro de dépôt: 07301623.0
(22) Date de dépôt: 04.12.2007
(51) Int. Cl.: F16D 23/02, F16D 11/10

(54) **Boîte de vitesses à synchronisation par crabots**

(30) Priorité: 27.12.2006 WO PCT/FR2006/055971
(71) Demandeur: PEUGEOT CITROËN AUTOMOBILES SA, 78140 Vélizy Villacoublay (FR)
(72) Inventeur: Mitchell, Clément, 92250 La Garenne Colombes (FR)

(57) **Abrégé**

L'invention concerne une boîte de vitesses à synchronisation par crabots

La boîte de vitesses comprend un arbre portant un pignon fou (11) et un manchon de crabotage (19) mobile en translation le long de cet arbre pour solidariser en rotation le pignon fou (11) et l'arbre lorsque ce manchon de crabotage (19) est rapproché du pignon fou (11). Le manchon de crabotage (19) comprend une denture de crabotage (26a-26e) apte à s'emboîter dans une face de crabotage du pignon fou (11). La face de crabotage comprend plusieurs gorges courbes (16a-16f), aptes chacune à recevoir une dent de crabotage (26a-26e), et chaque dent de crabotage (26a-26e) est mobile radialement par rapport à l'arbre portant le manchon de crabotage (19) pour être apte à coulisser le long d'une gorge (16a-16e) lorsqu'elle est engagée dans cette gorge.

L'invention s'applique aux boîtes de vitesses manuelles ou pilotées.

## Description

L'invention concerne une boîte de vitesses comprenant un arbre portant un pignon fou et un crabot ou manchon à crabots mobile en translation le long de cet arbre pour solidariser en rotation le pignon fou et l'arbre lorsque ce manchon à crabots est rapproché du pignon fou, le manchon à crabots comprenant des dentures de crabotage aptes à s'emboîter dans une face de crabotage du pignon fou.

L'invention peut s'appliquer plus particulièrement à une boîte de vitesses robotisée, c'est-à-dire pourvue d'actionneurs provoquant les mouvements de sélection et de passage de rapports, ainsi que les mouvements d'ouverture et de fermeture de l'embrayage.

Dans les boîtes de vitesses connues, le temps de changement de rapport est pénalisé par les synchroniseurs. Un synchroniseur sert à mettre le pignon fou à la même vitesse de rotation que l'arbre qui le porte, par friction, avant de solidariser ce pignon en rotation avec l'arbre qui le porte, à l'aide du manchon à crabots.

Le manchon à crabots et le pignon fou sont à cet effet pourvus de dentures de crabotage complémentaires s'emboîtant l'une dans l'autre lorsque le manchon à crabots est rapproché du pignon en étant déplacé le long de l'arbre qui les porte.

La synchronisation comprend les étapes d'armement, de synchronisation, de dévirage, de vol libre, et de crabotage, durant lesquelles l'actionneur doit fournir un niveau d'effort spécifique à chaque étape, avec dynamisme et précision.

Il a été envisagé de surdimensionner les synchroniseurs pour éviter de devoir ouvrir l'embrayage lors du changement de rapport N vers N+1 ou inversement, le couple étant alors transmis aux roues par le croisement des synchroniseurs de ces deux rapports durant le changement de rapport. Mais cette solution conduit à des synchroniseurs encombrants et complexes à piloter.

Le temps de changement de rapport peut aussi être réduit en solidarisant le pignon à l'arbre avec le manchon à crabots sans synchronisation préalable. Le pilotage est alors simplifié puisque le manchon à crabots doit seulement être déplacé en translation, en une seule étape caractérisée par la vitesse linéaire de translation.

Dans ce cas, les vitesses de rotation sont synchronisées instantanément par choc lorsque les dentures de crabotage s'emboîtent l'une dans l'autre, sans glissement. Cette solution peut fonctionner sans ouverture de l'embrayage, mais ceci augmente l'intensité du choc. Quoi qu'il en soit, le choc de synchronisation provoque des bruits et secousses potentiellement gênants pour les occupants du véhicule.

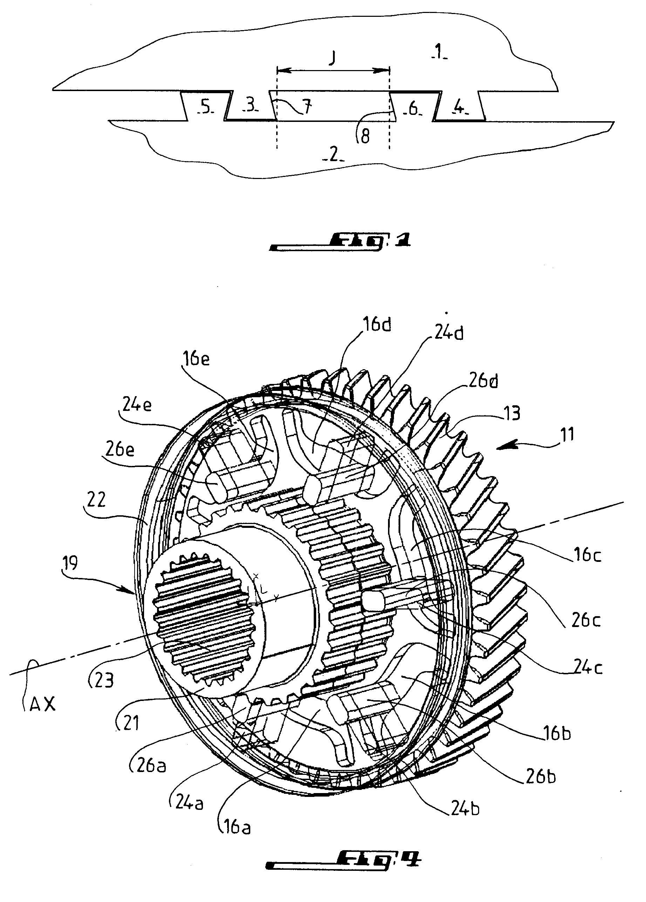

Un autre inconvénient de cette solution est le jeu de ré-attelage. Comme représenté en figure 1, il s'agit du jeu angulaire restant entre le manchon à crabots 1 et le pignon 2 une fois que la denture 3, 4 du manchon à crabots sont engagés dans la denture correspondante 5, 6 du pignon 2.

Ce jeu J correspond à la distance maximale, ou angle maximal autour de l'arbre secondaire, pouvant séparer les faces 7 et 8 d'une dent du pignon et d'une dent du manchon consécutives, ces faces étant celles qui sont orientées en vis-à-vis l'une de l'autre.

Dans le cas d'un crabotage sous choc, les dentures de crabotages doivent nécessairement être fortement espacées, afin de ne pas pénaliser la probabilité d'engagement de sorte que le jeu J de ré-attelage est lui-même important.

Ce jeu J de la transmission provoque des bruits et secousses lorsque successivement, le véhicule est mené par le moteur, puis le moteur est mené par le véhicule. Ceci, se produit par exemple lorsque le véhicule est dans une file et lorsqu'une faible charge moteur est ponctuellement appliquée, provoquant la traversée des jeux.

Ceci peut être réduit avec une solution connue qui met en oeuvre des demi-crabots. Mais ces demi-crabots doivent être dimensionnés pour transmettre la totalité du couple, ce qui donne lieu à une augmentation de l'encombrement de l'ensemble.

Une autre solution, présentée par le document WO2005026570, propose un moyen de changer instantanément de rapport de démultiplication sans rupture de couple à l'aide de crabots spécifiques. Toutefois, cette solution implique un nombre important de fourchettes, et donc potentiellement d'actionneurs à piloter pour changer de rapport, et quoi qu'il en soit, elle ne résout pas la question de l'intensité acoustique des chocs de synchronisation.

L'invention a pour objet de palier les inconvénients ci-dessus en proposant une architecture de boîte de vitesses à synchronisation instantanée par crabots, dans laquelle le jeu de ré-attelage est réduit et sans multiplication des moyens de commande.

A cet effet, l'invention a pour objet une boîte de vitesses comprenant un arbre portant un pignon fou et un manchon à crabots mobile en translation le long de cet arbre pour solidariser en rotation le pignon fou et l'arbre lorsque ce manchon à crabots est rapproché du pignon fou, le manchon à crabots comprenant des dentures de crabotage aptes à s'emboîter dans une face de crabotage du pignon fou, caractérisé en ce que la face de crabotage comprend plusieurs gorges courbes, aptes chacune à recevoir une dent de crabotage, et en ce que chaque dent de crabotage est mobile radialement par rapport à l'arbre portant le manchon à crabots pour être apte à coulisser le long d'une gorge lorsqu'elle est engagée dans cette gorge.

L'invention concerne également une boîte de vitesses telle que définie ci-dessus, dans laquelle chaque gorge a une forme générale correspondant à la lettre U, la base de ce U étant proche de l'arbre portant le pignon fou, et les deux branches du U s'éloignant radialement de cet arbre.

L'invention concerne également une boîte de vitesses telle que définie ci-dessus, comprenant un moyen élastique de rappel tendant à rapprocher les dents de crabotage de l'arbre portant le manchon à crabots.

L'invention concerne également une boîte de vitesses telle que définie ci-dessus, dans laquelle le moyen élastique de rappel est mécaniquement bloqué en position haute lorsque le rapport est engagé.

L'invention concerne également une boîte de vitesses telle que définie ci-dessus, dans laquelle le moyen élastique de rappel est mécaniquement bloqué en position haute par un système à cliquets.

L'invention concerne également une boîte de vitesses telle que définie ci-dessus, dans laquelle le manchon à crabots comprend plusieurs lumières radiales, et dans laquelle chaque dent de crabotage est montée coulissante dans une lumière.

L'invention concerne également une boîte de vitesses telle que définie ci-dessus, dans laquelle chaque dent de crabotage présente une extrémité apte à s'engager dans une gorge présentant deux faces latérales opposées qui sont inclinées l'une par rapport à l'autre d'un angle dit d'anti-lâcher.

L'invention concerne également une boîte de vitesses telle que définie ci-dessus, dans laquelle chaque gorge présente des bords opposés qui sont au moins localement inclinés l'un par rapport à l'autre d'un angle d'anti-lâcher.

L'invention concerne également une boîte de vitesses telle que définie ci-dessus, dans laquelle la face de crabotage du pignon fou est formée en rapportant par soudage une pièce plane pourvue de gorges courbes à une face du pignon fou.

L'invention concerne également une boîte de vitesses telle que définie ci-dessus, dans laquelle les gorges courbes de la face de crabotage du pignon fou sont usinées dans la masse.

L'invention sera maintenant décrite plus en détail, et en référence aux figures annexées.
La figure 1 est une représentation schématique du jeu de ré-attelage d'une boîte de vitesses à synchronisation par crabots connue ;
La figure 2 est une vue en perspective d'un pignon fou et de l'arbre le portant dans la boîte de vitesses selon l'invention ;
La figure 3 est une vue en perspective d'un manchon à crabots de la boîte de vitesses selon l'invention ;
La figure 4 est une vue en perspective d'un manchon à crabots accolé à un pignon fou dune boîte de vitesses selon l'invention ;
Les figures 5 à 9 montrent le manchon à crabots et le pignon fou durant les différentes étapes de crabotage dans la boîte de vitesses selon l'invention ;
La figure 10 montre en perspective une dent de crabotage engagée dans une gorge de pignon fou d'une boîte de vitesses selon l'invention ;
La figure 11 est une autre vue en perspective montrant une dent de crabot engagée dans une gorge de pignon fou d'une boîte de vitesses selon l'invention ;
La figure 12 est une vue de face montrant le jeu de ré-attelage dans une boîte de vitesses selon l'invention ;
La figure 13 est une vue en coupe d'une dent de crabotage de la boîte de vitesses selon l'invention, mais également du moyen d'usinage spécifique (forme de la fraise employée).

L'idée à la base de l'invention est de diminuer la vitesse d'impact des chocs de synchronisation, afin d'en réduire l'intensité. Les chocs sont rendus plus progressifs par la mise en oeuvre de surfaces qui glissent les unes sur les autres avant que ne se produise le choc.

Ceci est obtenu avec un pignon fou pourvu de gorges ayant des formes courbes, et un manchon à crabots portant des dents qui sont mobiles radialement. Chaque gorge est dimensionnée pour recevoir une dent de crabotage, et chaque dent de crabotage est apte à se déplacer le long d'une gorge lorsqu'elle est engagée dans celle-ci.

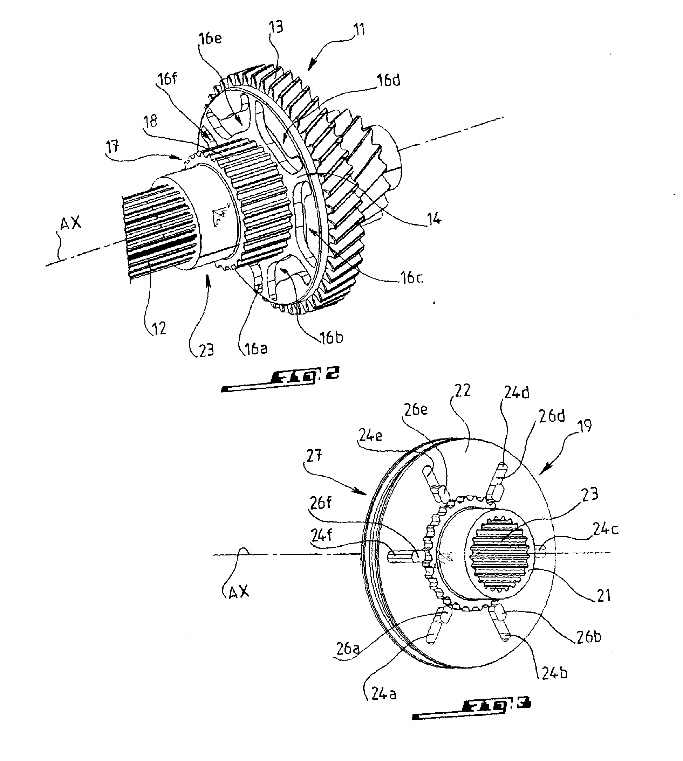

Le pignon fou 11 qui est représenté en figure 2 est porté par un arbre secondaire 12, orienté selon un axe AX, il comprend une denture externe 13 engrenée dans un pignon primaire non représenté, et il est mobile en rotation par rapport à l'arbre secondaire 12.

Ce pignon comprend une face latérale 14, dite de crabotage, pourvue dans cet exemple de six gorges 16a, 16b, 16c, 16d, 16e, 16f uniformément réparties autour de l'axe AX, deux gorges consécutives étant ainsi espacées de soixante degrés.

En pratique, le nombre de gorges peut être supérieur ou inférieur à six en étant supérieur à un minimum raisonnable de trois.

L'arbre secondaire 12 porte également un moyeu fixe 17, rigidement solidaire de cet arbre, et qui est situé contre la face de crabotage 14. Ce moyeu fixe a une surface externe 18 généralement cylindrique, qui est cannelé parallèlement à l'axe AX, sur laquelle s'engage un manchon à crabots 19 représentée en figure 3, qui est ainsi mobile en translation le long du moyeu et solidaire en rotation de celui-ci. La surface interne de ce moyeu 17 est également cannelée.

Le manchon à crabots 19 qui est monté sur le moyeu 17 comprend un manchon interne 21 portant une roue 22 qui l'entoure en étant rigidement solidaire de ce manchon interne. Le manchon interne 21 a sa surface interne 23 qui est cannelée pour s'engager sur le moyeu fixe 17 en étant apte à coulisser le long de celui-ci, c'est-à-dire le long de l'arbre 12 tout en en étant solidaire en rotation.

Le manchon à crabots 19 comprend, au niveau de la roue 22, six lumières 24a, 24b, 24c, 24d, 24e, 24f, portant respectivement six dents de crabotage 26a, 26b, 26c, 26d, 26e, 26f, qui coulissent radialement dans ces lumières, radialement. Chaque lumière a une forme oblongue orientée radialement par rapport à l'axe AX, et les six lumières sont uniformément réparties autour de l'axe AX, deux lumières consécutives étant ainsi espacées l'une de l'autre d'un angle de soixante degrés.

Les six dents de crabotage s'étendent parallèlement à l'axe AX pour dépasser d'une face de crabotage 27 qui est la face du manchon à crabots 19 opposée à celle apparaissant sur la figure 3.

Chaque dent a une forme générale de parallélépipède, dont quatre arêtes parallèles les unes aux autres et orientées selon l'axe AX sont arrondies. Chaque dent comprend également un chanfrein périphérique ou autre, non visible sur les figures, grâce auquel elle est bloquée axialement dans la lumière qui la porte.

Ces dents peuvent également être formées de deux parties fixées l'une à l'autre pour permettre leur montage dans les lumières. La roue 22 peut aussi être prévue avec des lumières 24a-24f débouchant dans la périphérie interne de cette roue, pour permettre l'engagement des dents dans leurs lumières avant solidarisation du manchon 21 à cette roue 22.

Chaque dent est rappelée en position rentrée, comme dans la figure 3, par exemple par un ressort radial de rappel non représenté, ou encore par un dévireur. Plus particulièrement, chaque dent est mobile en translation dans la lumière qui la porte, radialement par rapport à l'axe AX, entre la position rentrée, c'est-à-dire la plus proche de l'arbre 12 et une position dite sortie, c'est-à-dire la plus éloignée de l'arbre 12.

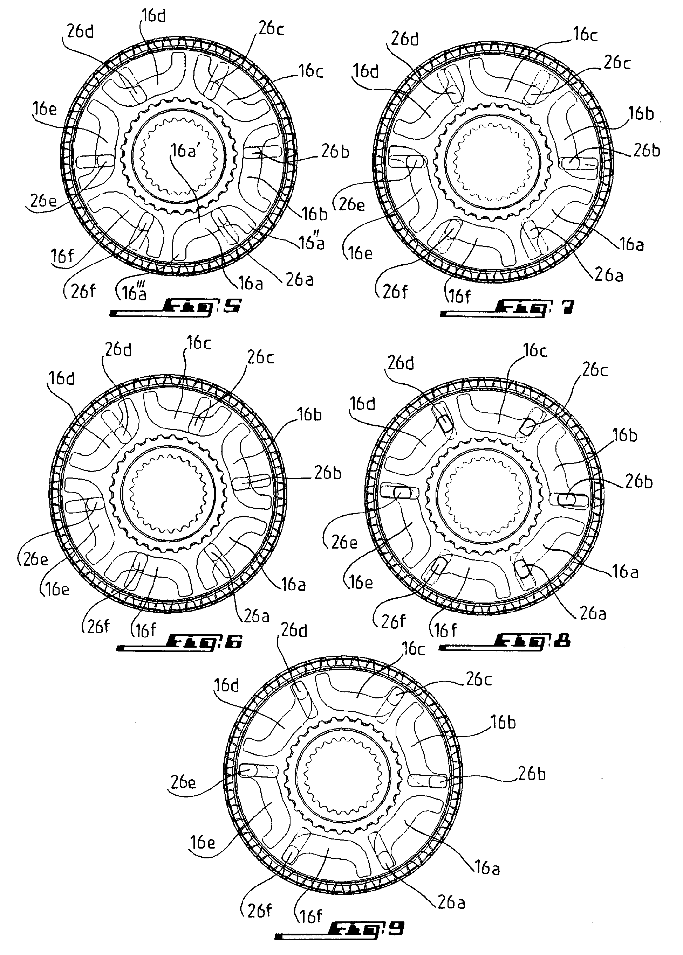

En ce qui concerne les gorges 16a à 16f du pignon fou 11, dont la forme apparaît plus clairement dans les figures 5 à 9, elles ont chacune une forme générale correspondant à la lettre U. La base de ce U est la partie la plus proche de l'arbre 12, et les deux branches de ce U s'éloignent chacune radialement de l'arbre 12. La base du U s'étend selon un arc de cercle centré sur l'axe AX, et elle est raccordée aux branches par des portions courbées.

Dans la figure 5, la base du U est repérée par 16a', et l'on a repéré par 16a" une première extrémité de la gorge 16 correspondant à la première branche du U, et par 16a"' une seconde extrémité de cette gorge correspondant à la seconde branche du U.

Ces gorges peuvent être directement usinées dans la masse du pignon secondaire, mais elles peuvent aussi être obtenues en soudant un disque dans lequel elles ont été préalablement usinées, à la face correspondante du pignon.

Comme le montre la figure 4, lorsque le crabot 19 est accolé à la face de crabotage 14 du pignon fou 11, chaque dent 26a-26f a son extrémité dépassant axialement de la face 27, qui est engagée dans une gorge correspondante 16a-16f de la face de crabotage 14.

La longueur de chaque lumière 24a-24f, selon la direction radiale correspond à la longueur de chaque gorge 16a-16f mesurée radialement, c'est-à-dire à la longueur de chaque branche radiale de ces gorges.

Ainsi, dans l'exemple de la figure 4, les dents sont engagées dans les gorges tout en étant rentrées, c'est-à-dire proches de l'arbre 12, de sorte qu'elles sont engagées dans la base des gorges qui est la partie de ces gorges la plus proche de l'arbre 2.

Avant engagement d'un rapport par déplacement du crabot 19, les dents 26a-26f sont rentrées, pour pouvoir s'engager dans les bases des gorges 16a-16f correspondantes, comme c'est le cas dans la figure 5. Elles disposent alors de larges fenêtres d'engagement valant approximativement quarante degrés.

Une fois qu'une dent est engagée dans une gorge, le pignon ayant une vitesse de rotation différente de celle du crabot, elle coulisse d'abord dans la base de la gorge, sans coulisser radialement dans la lumière qui la porte, ce qui correspond à la situation de la figure 6.

Ensuite, cette dent entre en interférence avec le profil de la gorge, à savoir la partie courbe de cette gorge correspondant à la jonction entre sa base et sa branche radiale. Elle glisse alors le long de ce profil, ce qui est autorisé par la mobilité radiale dont dispose chaque dent, cette situation correspondant aux figures 7 et 8.

La vitesse du pignon commence alors à se rapprocher de celle du galet puisqu'un effort s'exerce au niveau du contact entre dent et gorge selon une direction normale à ce contact, en plus de l'effort du ressort radial du manchon.

La composante radiale de cette force diminue au profit de sa composante orthoradiale, au fur et à mesure que les dents se déplacent dans leurs gorges respectives, de sorte que la différence de vitesse entre le pignon et crabot diminue graduellement.

La dent atteint ensuite son logement, en se plaçant en butée à une extrémité de la gorge, ce qui correspond à la figure 9. Grâce à la partie courbe, la différence de vitesses entre le pignon et le crabot continue de diminuer pendant que la dent parcourt la gorge tout en s'éloignant radialement de l'arbre 12, de sorte que le choc final a une très faible intensité.

Une fois que la dent est en fond de gorge, position qu'elle atteint de manière progressive, elle occupe sa position radialement sortie, et la transmission de couple est assurée par l'une ou l'autre des faces latérales de la dent. Les ressorts radiaux du manchon sont bloqués en position comprimée, par exemple par un système mécanique non représenté, tel qu'un système à cliquets.

Le couple est transmis par l'une des faces si c'est le moteur qui tire la voiture, et il est transmis par l'autre face si c'est au contraire la voiture qui entraîne le moteur. Dans l'exemple des figures 5 à 9, c'est le moteur qui tire le véhicule.

Chaque gorge a une forme symétrique par rapport à un plan passant par l'axe AX, de sorte que lors de l'engagement, les dents se déplacent vers l'une ou l'autre des extrémités des gorges selon que le pignon a une vitesse de rotation supérieure à celle du crabot ou qu'au contraire, il a une vitesse inférieure à celle du crabot.

La face latérale de la dent assurant la transmission de couple est déterminée ensuite, selon que le moteur tire le véhicule ou que le véhicule entraîne le moteur.

Ainsi, les deux paramètres, à savoir le sens du couple à transmettre et la différence des vitesses de rotation du crabot et du pignon, sont donc rendus indépendants au moment de l'engagement d'un rapport, ce qui simplifie le pilotage des organes de la boîte de vitesses ainsi que le dimensionnement des sources de puissance.

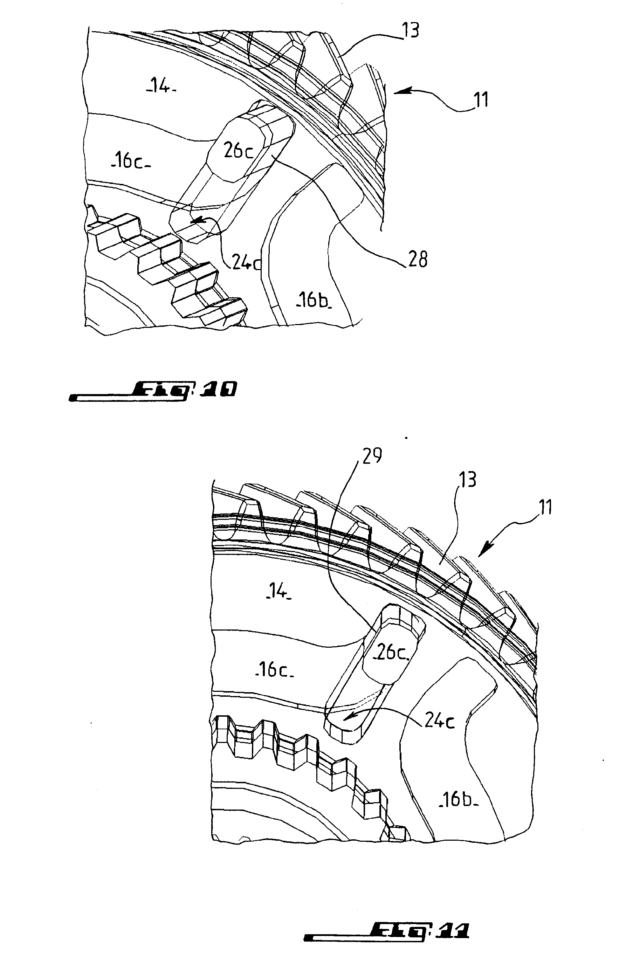

Dans l'exemple des figures 5 à 9, c'est le couple délivré par le moteur qui est transmis aux roues, le couple étant alors transmis par une première face des dents, repérée par 28 dans la figure 10. Si le véhicule se trouve en descente ou si le conducteur relâche l'accélérateur, alors le couple transmis change de sens et le moteur devient entraîné par le véhicule. C'est alors une seconde face, repérée par 29 dans la figure 11 qui transmet le couple.

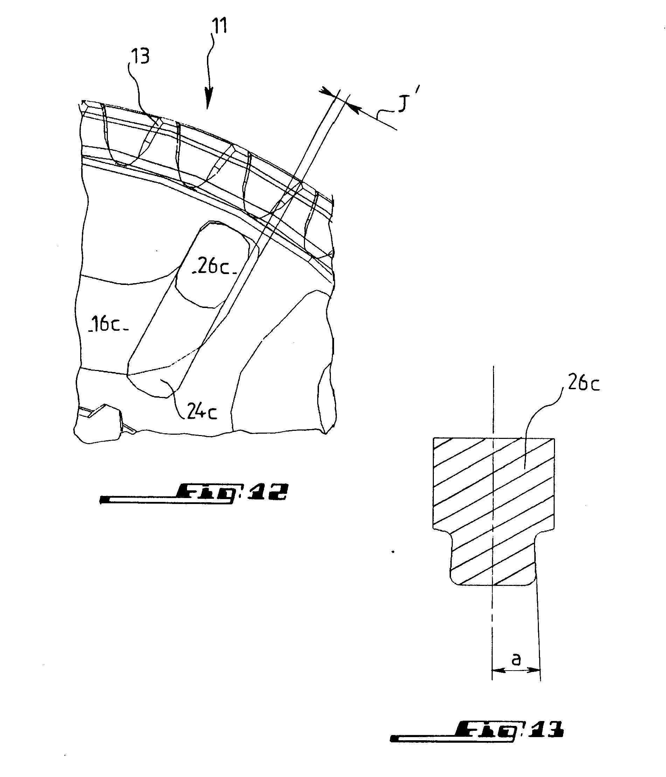

L'invention permet de réduire le jeu de réattelage à une valeur quasiment nulle, ce jeu étant repéré par J' dans la figure 12. En effet, le jeu de réatelage correspond au jeu angulaire de la dent par rapport à la gorge, lorsqu'elle est en fond de gorge, c'est à dire dans sa position complètement sortie. Il s'agit donc d'un jeu ayant simplement une valeur minimum résultant de tolérances de fabrication de la gorge et de la dent, ainsi que de la géométrie fixée.

Contrairement à un crabot classique, le jeu de réatelage J' est ainsi indépendant de la taille de la fenêtre d'engagement. Dans les crabots classiques, la fenêtre d'engagement fixe par son dimensionnement la valeur du jeu de ré-attelage.

Pour assurer la transmission du couple en rapport engagé, les faces latérales de chaque dent sont légèrement inclinées par rapport à un plan passant par l'axe AX. Cet angle d'inclinaison qui vaut quelques degrés, appelé angle d'anti-lâcher est repéré par la lettre "a" dans la figure 13.

Cet angle peut être obtenu avec une fraise appropriée utilisée pour la fabrication des dents. Avantageusement, la même fraise est utilisée pour l'usinage des gorges, qui ont ainsi elles aussi leurs bords inclinées d'un angle complémentaire pour assurer un appui plan lorsqu'une dent est en appui sur un bord.

Ces angles qui correspondent à une dépouille de quelques degrés assurent que les dents ne peuvent pas se désengager spontanément pendant qu'elles transmettent un couple.

Ainsi, l'invention permet de réduire l'intensité des chocs de synchronisation instantanée par crabots, ce qui réduit le bruit généré ainsi que les secousses, mais permet également d'augmenter la durée de vie de la boîte de vitesses.

L'invention permet de réduire considérablement le jeu de ré-attelage, pour le rendre comparable au jeu de ré-attelage des crabots de boîtes de vitesses synchronisées.

La dimension de la fenêtre d'engagement et le jeu de ré-attelage sont indépendants grâce aux parties radiales des gorges.

L'invention facilite l'engagement d'un rapport puisque le pilotage d'un crabot est indépendant du sens du couple à transmettre : l'engagement d'un rapport est réalisé de la même façon, quelque soit la situation, et il n'est pas nécessaire de moduler les efforts délivrés par l'actionneur. Ceci permet également de réduire le temps de changement de rapport.

L'invention permet également de réduire l'encombrement de la boîte de vitesses et est adaptable aux différentes boîtes de vitesses existantes.

## Revendications

1. Boîte de vitesses comprenant un arbre (12) portant un pignon fou (11) et un manchon à crabots (19) mobile en translation le long de cet arbre (12) pour solidariser en rotation le pignon fou (11) et l'arbre (12) lorsque ce manchon à crabots (19) est rapproché du pignon fou (11), le manchon à crabots (19) comprenant des dentures de crabotage (26a-26f) aptes à s'emboîter dans une face de crabotage (14) du pignon fou (11), **caractérisé en ce que** la face de crabotage (14) comprend plusieurs gorges courbes (16a-16f), chaque gorge (16a-16f) ayant une forme générale correspondant à la lettre U, la base (16a') de ce U étant proche de l'arbre (12) portant le pignon fou (11), et les deux branches (16a", 16a"') du U s'éloignant radialement de cet arbre (12) pour recevoir une dent de crabotage (26a-26f), et **en ce que** chaque dent de crabotage (26a-26f) est mobile radialement par rapport à l'arbre (12) portant le manchon à crabots (19) pour être apte à coulisser le long d'une gorge (16a-16f) lorsqu'elle est engagée dans cette gorge.

2. Boîte de vitesses selon la revendication 1, comprenant un moyen élastique de rappel tendant à rapprocher les dents (26a-26f) de crabotage de l'arbre (12) portant le manchon à crabots (19).

3. Boîte de vitesses selon la revendication 2, dans laquelle le moyen élastique de rappel est mécaniquement bloqué en position haute lorsque le rapport est engagé.

4. Boîte de vitesses selon la revendication 3, dans laquelle le moyen élastique de rappel est mécaniquement bloqué en position haute par un système à cliquets.

5. Boîte de vitesses selon l'une des revendications 1 à 4, dans laquelle le manchon à crabots (19) comprend plusieurs lumières radiales (24a-24f), et dans laquelle chaque dent de crabotage (26a-26f) est montée coulissante dans une lumière.

6. Boîte de vitesses selon l'une des revendications précédentes, dans laquelle chaque dent de crabotage (26a-26f) présente une extrémité apte à s'engager dans une gorge présentant deux faces latérales (28, 29) opposées qui sont inclinées l'une par rapport à l'autre d'un angle dit d'anti-lâcher.

7. Boîte de vitesses selon la revendication 6, dans laquelle chaque gorge (16a-16f) présente des bords opposés qui sont au moins localement inclinés l'un par rapport à l'autre d'un angle d'anti-lâcher.

8. Boîte de vitesses selon l'une des revendications 1 à 7, dans laquelle la face de crabotage (14) du pignon fou (11) est formée en rapportant par soudage une pièce plane pourvue de gorges courbes (24a-24f) à une face du pignon fou (11).

9. Boîte de vitesses selon l'une des revendications 1 à 7, dans laquelle les gorges courbes (24a-24f) de la face de crabotage (14) du pignon fou (11) sont usinées dans la masse
